# EUROPEAN PATENT APPLICATION

(11) **EP 3 122 082 A1**
(43) Date of publication of application: **25.01.2017**
(21) Application number: 15306205.4
(22) Date of filing: 24.07.2015
(51) Int. Cl.: H04W 12/02, H04W 4/00, H04L 29/06, G06Q 20/32

(54) **METHOD TO SECURE AN APPLICATIVE FUNCTION IN A CLOUD-BASED VIRTUAL SECURE ELEMENT IMPLEMENTATION**

(71) Applicant: GEMALTO SA, 92190 Meudon (FR)
(72) Inventor: GUICHARD, Olivier, 13881 GEMENOS CEDEX (FR); AILLAUD, Christophe, 13881 GEMENOS CEDEX (FR); CHENE, Gilles, 13881 GEMENOS CEDEX (FR)
(74) Representative: Scheer, Luc

(57) **Abstract**

The present invention relates to a method to secure an applicative function in a cloud-based virtual secure element (VSE) implementation, said virtual secure element (VSE) being intended to be used by a dedicated emulated secure element application (SEA) to perform said applicative function, said implementation being supported by a user device (UD) comprising the emulated secure element application (SEA) and a local secure element (LSE) comprising a Public Key Infrastructure (PKI) applet and by a cloud remote server (CLD) having an emulated virtual secure element (VSE) corresponding to the user of the user device (UD), said user device (UD) and cloud remote server (CLD) further respectively having a secure cloud library (SCL) and a secure cloud front-end (SCF).

## Description

### FIELD OF THE INVENTION

The present invention relates to a method to secure an applicative function in a cloud-based virtual secure element implementation, said virtual secure element being intended to be used by a dedicated emulated secure element application to perform said applicative function, said implementation being supported by a user device comprising the emulated secure element application and by a cloud remote server having an emulated virtual secure element corresponding to the user of the user device, said user device and remote server further respectively having a secure cloud library and a secure cloud front-end.

The invention also pertains to a user device implementing said method.

### BACKGROUND OF THE INVENTION

Today, the near field communication (NFC) standard allows a device to emulate a secure element in order to process a payment for example. This technology is known as card emulation mode.

In the original NFC specification, a real tamper-resistant secure element, UICC, eSE..., is in charge to process the APDU commands sent by a point of sale device (POS) to the NFC user device.

In 2013, some device operating systems introduced the soft card emulation, also known as HCE or Host Card Emulation. The major issue with HCE is that credentials and user data are no more stored locally in a tamper-resistant module, but, either in the host device itself and thus in a non-secure environment or in the cloud. Important security issues exist and remain unsolved until now. Those issues are particularly critical in context of payments where very sensitive information is required to be transferred, like at least PAN and expiration date of a credit card, to enable the transaction.

Further alternative and advantageous solutions would, accordingly, be desirable in the art.

### SUMMARY OF THE INVENTION

The present invention aims at enhancing the security while keeping the advantages of the HCE technology.

The present invention is defined, in its broadest sense, as a method to secure an applicative function in a cloud-based virtual secure element implementation, said virtual secure element being intended to be used by a dedicated emulated secure element application to perform said applicative function, said implementation being supported by a user device comprising the emulated secure element application and a local secure element comprising a Public Key Infrastructure (PKI) applet and by a cloud remote server having an emulated virtual secure element corresponding to the user of the user device, said user device and remote server further respectively having a secure cloud library and a secure cloud front-end,
said method comprising the preliminary steps of, for the PKI applet, personalizing the PKI applet and generating at least a public/private key pair,
said method further comprising the steps of, for the secure cloud library, accessing the local secure element to request cryptographic operations based on the key pair to establish a secure channel with the user corresponding virtual secure element and, for the secure cloud library, establishing a secure channel with the user corresponding virtual secure element in the cloud remote server for the applicative function using results of said cryptographic operations.

The invention provides a way to establish a secure link between a user device and a remote virtual secure element in the cloud using a local secure element. Instead of being processed by the local secure element, UICC, eSE..., NFC transactions for payment, transport, access control... are processed by the host user device and the cloud using Host Card Emulation with a high security level as a local secure element provides cryptographic material on request to the application on the user device.

The invention proposes to use a single and pre-personalized local secure element in order to setup a secure link between the host device and one or several virtual secure element(s) in the cloud. This solution simplifies the development and deployment of new applications via cloud virtual secure elements without compromising user data and with a high security level.

According to a particular feature of the invention, the method comprises a step of exporting the public part of the key pair in a certificate towards the cloud remote server to enable it to identify and authenticate the user and wherein the private part of the key pair is kept inside the local secure element.

This step enables in a very simple way, the cloud remote server to access the public part of the key as stored in the user device which also stores the emulated secure element application.

According to an advantageous embodiment, said cryptographic operations comprise session key generation, said session key being then sent to the secure cloud library for use in the secure channel establishment to encrypt data between the user device's emulated secure element application and the cloud remote server.

This embodiment requires the communication of the session key from the local secure element to the emulated secure element application via the secure cloud library. The secure cloud library is the interface between the Host Card Emulation application and the local secure element. Session key is computed by the local secure element and sent to the secure cloud library. The session key is then used by the emulated secure element application to establish a secure channel with the corresponding application's and corresponding user's virtual secure element in the cloud. It is of course necessary for the session key to have a limited validity and other security feature as known in the art.

According to a preferred embodiment of the invention, said cryptographic operations comprise signature calculation.

Such a calculation enables to add a verification level before the emulated secure element application is authorized to ask for a session key. The use of the signature before any key generation adds a very interesting security level. It is further a very simple and economic measure as it only requires to send, for example, messages previously exchange with the remote cloud server to the local secure element to sign and to retrieve the signatures. None exposure of any key of any kind is at risk in such a calculation.

According to an implementation, said secure channel is based on SSL Strong Authentication protocol.

This protocol offers a convenient security in the context of the invention.

In a specific application, emulated secure element application implementation is compliant with the Host Card Emulation (HCE) standard.

This standard used in NFC transaction is wide spread and the invention finds here a great field of application.

According to a specific feature, said method comprises a bootstrap phase comprising the steps of:
- for the device, retrieving a PKI applet,
- for the device, forwarding the PKI applet to the local secure element,
- for the local secure element, personalizing the PKI applet and generating at least one key pair.

This bootstrap phase enables to render the local secure element able to implement the invention while providing it with a key pair, compulsory for the implementation of the invention. The presence of a key pair in the local secure element is the single requirement for the local secure element. It results in a user enrolment.

The present invention also relates to a device comprising a dedicated emulated secure element application to perform an applicative function using a cloud-based virtual secure element implementation using a cloud remote server having an emulated virtual secure element corresponding to the user, said user device further comprising a local secure element comprising a Public Key Infrastructure (PKI) applet, said PKI applet storing at least one key pair, said user device having a secure cloud library intended to cooperate with a secure cloud front-end in the cloud remote server,
said secure cloud library being adapted to access the local secure element to request cryptographic operations based on the key pair to establish a secure channel with the user corresponding virtual secure element and to establish a secure channel with the user corresponding virtual secure element in the cloud remote server for the execution of the applicative function using results of said cryptographic operations.

Such a device enables a user to perform the applicative function in a secure way while enabling to keep the advantages of emulated secure element technology in terms of update possibilities and application management flexibility.

To the accomplishment of the foregoing and related ends, one or more embodiments comprise the features hereinafter fully described and particularly pointed out in the claims.

### BRIEF DESCRIPTION OF THE DRAWINGS

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.
- Figure 1 schematically represents an environment in which the invention is implemented;
- Figure 2 shows a sequence diagram of the execution of an applicative function as secured by the invention;
- Figure 3 shows a detailed sequence diagram of the open channel step as shown in figure 2.

### DETAILED DESCRIPTION OF EMBODIMENTS OF THE INVENTION

For a more complete understanding of the invention, the invention will now be described in detail with reference to the accompanying drawing. The detailed description will illustrate and describe what is considered as a preferred embodiment of the invention. It should of course be understood that various modifications and changes in form or detail could readily be made without departing from the spirit of the invention. It is therefore intended that the invention may not be limited to the exact form and detail shown and described herein, nor to anything less than the whole of the invention disclosed herein and as claimed hereinafter. The same elements have been designated with the same references in the different drawings. For clarity, only those elements and steps which are useful to the understanding of the present invention have been shown in the drawings and will be described.

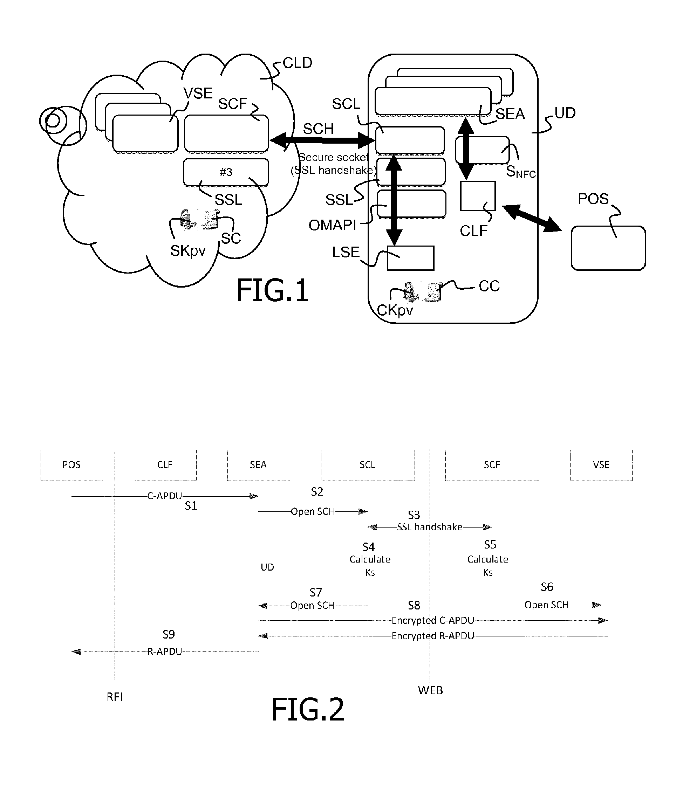

FIG. 1 schematically shows an environment in which the invention is deployed. The presented environment is illustrative and concerns a payment transaction as an applicative function. The transaction occurs between a Point Of Sale device POS, typically a payment terminal at a premise, and a user device UD using Near Field Communication (NFC) technology, typically a smart phone.

The user device UD has means to establish communication with the Point Of Sale device POS, typically here a NFC stack S_{NFC} and a contactless front-end CLF. The communication with the POS enables to realize the applicative function which is here a transaction.

The user device UD stores at least one application SEA using secure element emulation enabling the applicative function to be performed. In an NFC context, the application SEA is of the Host Card emulation (HCE) type. It is here noted that other secure element emulation types are concerned by the invention, for example in BlueTooth or Wifi contexts. In this case, applicative function is typically file/data transfer or other applicative function in which transfer of data needs to be secured.

The dedicated emulated secure element application SEA uses a secure cloud library SCL to communicate with a secure cloud front-end SCF in a cloud CLD. Thus here is described an NFC scheme between a NFC user device UD and a virtual secure element VSE in the cloud CLD, said virtual secure element VSE corresponding to one given bank and one given user, so one given bank account. The group formed by the virtual secure element and the local secure element with the dedicated emulated secure element application form a secure payment element, which can be compared to a payment chip card. The device UD is thus connected to the cloud CLD either in Wifi, 3G, LTE....

The secure cloud library SCL is completed by an SSL module and Open Mobile Application Programming Interfaces (or Object Management Application Programming Interface) OMAPI useful for the implementation of the library SCL and the establishment of a secure channel according to the invention.

The secure cloud library SCL works in collaboration with a secure cloud front-end SCF in the cloud CLD. This secure cloud front-end SCF has also an SSL module and is linked to a virtual secure element VSE corresponding to the user of the device UD. The secure cloud front-end has also access to at least a server private key SKpv, schematically illustrated by a locker, and a corresponding certificate SC, illustrated by a parchment scroll.

The server private key(s) is(are) hosted and managed by the secure cloud front-end SCF in order to establish the secure link. In practice, a "key data base" object is attached to the secure cloud front-end SCF to store several keypairs hosted in the secure cloud front-end SCF. The keypair selection is then done according to the client application (e.g. keypair #1 used for Boursorama application, keypair #2 for BNP application...)

For the implementation of the invention, it is further necessary for the user device UD to comprise a local secure element LSE. This local secure element LSE stores at least a client private key CKpv and a client certificate CC, also respectively illustrated by a locker and a parchment scroll.

Generally, a bootstrap phase is thus necessary to install and personalize a PKI applet in the local secure element LSE. At least, a key pair and a certificate CC comprising a public key are then generated by the PKI applet to identify and authenticate the client.

Figure 2 schematically discloses a sequence diagram of a transaction applicative function where the invention is implemented between a point of sale POS connected through a radiofrequency interface RFI, typically NFC interface, with a user device UD itself connected through internet WEB with a cloud. As the user device UD is approached to the point of sale device POS, a command APDU C-APDU is sent in a step S1 by the POS to the user device UD through the contactless Front-end CLF of the user device UD. The command is dedicated to reach the emulated secure element application SEA in the user device UD, here an HCE client application. This command C-APDU requires secure interactions with a remote virtual secure element VSE in the cloud CLD. To secure this interaction a secure channel SCH is required to be opened between the application SEA and the virtual secure element VSE. A secure socket, for example based on an SSL handshake, is thus necessitated. In a step S2, the opening of a secure channel SCH is requested by the secure element application SEA. The secure cloud library SCL consequently performs an SSL handshake with the secure cloud front-end SCF in a step S3.

Then, in a step S4, the secure cloud library SCL requests the local secure element LSE to generate a session key Ks and retrieves this session key Ks to be used by the emulated secure element application SEA in further exchanges with the virtual secure element VSE.

In parallel, in a step S5, the secure cloud front-end SCF, having access to the server certificate SC and to the server private key SKpv also calculates the session key Ks. The secure cloud front-end then sends the calculated session key Ks to the virtual secure element VSE with an open secure channel SCH request in a step S6. In parallel, in a step S7, the secure cloud library SCL sends the other calculated session key Ks to the emulated secure element application SEA which is then able to establish a secure channel SCH in a step S8 with the virtual secure element VSE.

Encrypted APDU are exchanged via the secure channel SCH between the emulated secure element application SEA and virtual secure element VSE. Those APDU are decrypted using the session key Ks and they enable the emulated secure element application SEA to prepare an answer R-APDU to the point of sale command C-APDU and to send the answer R-APDU to the point of sale POS in a step S9 in order to enable the applicative function, here a transaction.

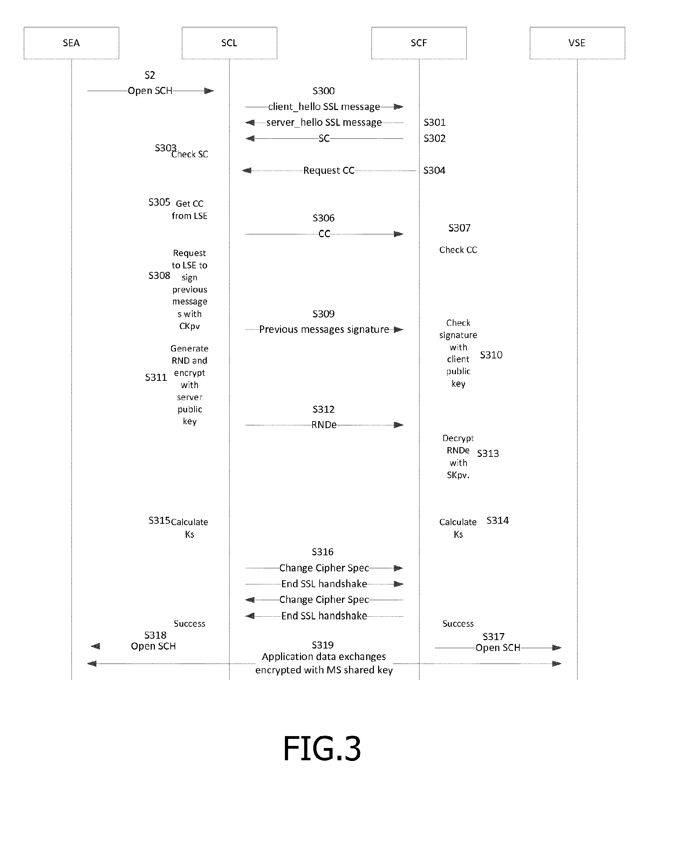

The establishment of the secure channel including generation of the session key Ks is described in further details in relation with figure 3.

After the open secure channel request is received in the step S2 by the secure cloud library SCL, this last sends, in a step S300, a client_hello SSL message is sent to the secure front-end front-end SCF which answers by the sending of a server_hello SSL message in a step S301 and by the sending of a server certificate SC in a step S302.

In a step S303, the secure cloud library SCL checks the server certificate SC received from the cloud CLD. It enables to be compliant with the necessity for the client to verify the server certificate, i.e. verify the signature using the public key contained in the certificate.

In parallel, following the reception of the client_hello SSL message in step S300, the contacted server in the cloud CLD requests a client certificate CC in a step S304. The secure cloud library SCL consequently asks the local secure element LSE for the client certificate CC and gets it in a step S305.

The secure cloud library SCL then sends the client certificate CC to the secure cloud front-end SCF in a step S306. The server in the cloud CLD then checks the client certificate CC in a step S307.

Preferably, messages previously sent to the secure cloud front-end SCF are sent to the local secure element LSE for them to be signed with the client private key CKpv in a step 308. The signed messages are then returned in a step S309 to the secure cloud library SCL for it to check, in a step S310, the signature using the client public key extracted from the certificate CC.

In parallel, in a step S311, the secure cloud library SCL generates a random RND and encrypts it with the public key of the server extracted from the server certificate SC. The encrypted random RNDe is then sent to the secure cloud front-end SCF in a step S312. The secure cloud front-end SCF access the server private key SKpv, itself hosted by the secure cloud front-end SCF, and decrypts the encrypted random RNDe in a step S313, typically according to an asymmetric RSA encryption-decryption scheme.

Then the secure cloud front-end calculates a session key Ks using the decrypted random RND in a step S314. In parallel, in a step S315, the local secure element LSE calculates also the session key Ks with the random RND as transferred by the secure cloud library SCL.

Then classical steps S316 of an SSI handshake using a session key Ks are performed including exchanges ("change cipher spec" step) of cipher specifications and ending SSL handshake. The "Change Cipher Spec" step consists in an algorithm negotiation between the server and the client to select the best cipher suite, for example DES, 3DES or AES..., depending on capabilities. Then, both client and server switch to this cipher suite with the session key to encrypt messages.

A secure channel SCH is then requested to be opened by the virtual secure element VSE. An open channel SCH request comprising the session key Ks as calculated by the secure cloud front-end is sent by the secure cloud front-end SCF to the virtual secure element VSE in a step S317. Another open channel request comprising the session key Ks as calculated by the secure cloud library SCL is sent to the emulated secure element application SEA in a step S318. Then the emulated secure element application SEA and the virtual secure element VSE can exchange data in a step S319 through the secure channel SCH.

Additional security measures can be implemented like short time validity of the session keys, or validity limited to a predetermined number of times.

As a summary, with the invention, when an emulated secure element application on the user device UD needs to contact a virtual secure element VSE in the cloud CLD, a secure connection is established, with mutual authentication between the server in the cloud CLD and the client, and data encryption using a session key Ks generated by the local secure element LSE in the user device UD. Mutual authentication is thus established between the cloud and the user device and practically, between secure cloud front-end SCF and secure cloud library SCL. The invention particularly applies to online payment using smartphones. More particularly, it enables to protect a restricted use secret key or EMV data like PAN or expiration date. The virtual secure element enables to replace a device like a credit card in a transaction.

One of the advantages of the invention is to secure the use of virtual secure element which has the advantage to be easier to update than in a device installed secure element. There is only the need to implement a PKI applet in a local secure element in a pre-personalization phase and then no more actions are required to upgrade applicative functions in the user device. Only emulated secure element applications are added and virtual secure element upgraded in function of the needs.

With the invention, the secure element as provided by a chip card for example, is like split in two parts: one part common for all the applets enabling to secure the communications and another part constituted by all the virtual secure elements each dedicated to one applicative function, for example one for each payment applet. Updates of applets and addition of applets are done in the server directly which is very convenient. A trusted services manager can monitor these actions on every-time accessible virtual secure elements to upload profile, updates...

It is here noted that virtual secure elements can be deployed in one or several clouds. In the case of several clouds, the secure cloud front-end serves as a proxy.

The idea is to use for example a standard SSL handshake between the client and the server, with client private key and certificate stored in the local secure element LSE with the help of a PKI applet. Server and client must exchange and verify their certificates. The client private key will be used by the local secure element LSE in order to generate the client cryptogram and then, compute the session key to encrypt further communications.

One advantage of this solution is that the private key and certificate only need to be provisioned once in the local secure element LSE, then they can be used to secure the link between the secure cloud library SCL and the secure cloud front-end SCF, whatever the emulated secure element application SEA, of HCE type or other, and virtual secure element VSE involved. So, many services and applications can be deployed later without any change in the local secure element. Additionally, the emulated secure element applications do not need to have access to the local secure element. Only the secure cloud library needs to access the local secure element, simplifying for instance the management of OMAPI access rules.

Moreover, the remote virtual secure elements can be managed by a trusted service manager (TSM), as a standard secure element, but without accessibility constraints. Virtual secure elements are always accessible.

The invention allows to support emulated secure element applications in a virtual secure element in the cloud with a high security level. In particular, the invention avoids credentials, like keys, certificates..., to be stored locally in a non-secure environment or to be known by the user, e.g. password.

In the above detailed description, reference is made to the accompanying drawings that show, by way of illustration, specific embodiments in which the invention may be practiced. These embodiments are described in sufficient detail to enable those skilled in the art to practice the invention. The above detailed description is, therefore, not to be taken in a limiting sense, and the scope of the present invention is defined only by the appended claims, appropriately interpreted, along with the full range of equivalents to which the claims are entitled.

## Claims

1. Method to secure an applicative function in a cloud-based virtual secure element (VSE) implementation, said virtual secure element (VSE) being intended to be used by a dedicated emulated secure element application (SEA) to perform said applicative function, said implementation being supported by a user device (UD) comprising the emulated secure element application (SEA) and a local secure element (LSE) comprising a Public Key Infrastructure (PKI) applet and by a cloud remote server (CLD) having an emulated virtual secure element (VSE) corresponding to the user of the user device (UD), said user device (UD) and cloud remote server (CLD) further respectively having a secure cloud library (SCL) and a secure cloud front-end (SCF),
said method comprising the preliminary steps of, for the PKI applet, personalizing the PKI applet and generating at least a public/private key pair (CC, CKpv),
said method further comprising the steps of, for the secure cloud library (SCL), accessing (S305, S308) the local secure element (LSE) to request cryptographic operations based on the key pair (CC, CKpv) to establish a secure channel (SCH) with the user corresponding virtual secure element (VSE) and, for the secure cloud library (SCL), establishing (S8) a secure channel (SCH) with the user corresponding virtual secure element (VSE) in the cloud remote server (CLD) for the applicative function using results of said cryptographic operations.

2. Method according to claim 1, wherein it comprises a step of exporting (S306) the public part of the key pair in a certificate (CC) towards the cloud remote server (CLD) to enable it to identify and authenticate (S307) the user and wherein the private part (CKpv) of the key pair is kept inside the local secure element (LSE).

3. Method according to one of preceding claims, wherein said cryptographic operations comprise session key (Ks) generation (S315), said session key (Ks) being then sent to the secure cloud library (SCL) for use in the secure channel (SCH) establishment to encrypt data between the user device's emulated secure element application (SEA) and the cloud remote server (CLD).

4. Method according to one of preceding claims, wherein said cryptographic operations comprise signature calculation (S308).

5. Method according to one of preceding claims, wherein said secure channel (SCH) is based on SSL Strong Authentication protocol.

6. Method according to one of preceding claims, wherein emulated secure element application (SEA) implementation is compliant with the Host Card Emulation (HCE) standard.

7. Method according to one of preceding claims, wherein, said method comprises a bootstrap phase comprising the steps of:
- for the user device (UD), retrieving a PKI applet,
- for the user device (UD), forwarding the PKI applet to the local secure element (LSE),
- for the local secure element (LSE), personalizing the PKI applet and generating at least one key pair (CC,CKpv).

8. Device (UD) comprising a dedicated emulated secure element application (SEA) to perform an applicative function using a cloud-based virtual secure element (VSE) implementation using a cloud remote server (CLD) having an emulated virtual secure element (VSE) corresponding to the user, said user device (UD) further comprising a local secure element (LSE) comprising a Public Key Infrastructure (PKI) applet, said PKI applet storing at least one key pair (CC, CKpv), said user device (UD) having a secure cloud library (SCL) intended to cooperate with a secure cloud front-end (SCF) in the cloud remote server (CLD),
said secure cloud library (SCL) being adapted to access the local secure element (LSE) to request cryptographic operations based on the key pair (CC, CKpv) to establish a secure channel (SCH) with the user corresponding virtual secure element (VSE) and to establish a secure channel (SCH) with the user corresponding virtual secure element (VSE) in the cloud remote server (CLD) for the execution of the applicative function using results of said cryptographic operations.
